# EUROPEAN PATENT APPLICATION

(11) **EP 2 916 420 A1**
(43) Date of publication of application: **09.09.2015**
(21) Application number: 14742446.9
(22) Date of filing: 28.01.2014
(51) Int. Cl.: H02J 7/00

(54) **MOBILE POWER SUPPLY THAT CAN CARRY CHARGING CONVERSION ADAPTER AND SUPPORTS TWO-DIMENSIONAL BAR CODE IDENTIFICATION**

(30) Priority: 14.01.2014 CN 201420023014 U
(71) Applicant: Gadmei Electronics Technology Co., Ltd., Qingyuan Guangdong 511542 (CN)
(72) Inventor: YAO, Yuanping, Qingyuan, Guangdong 511542 (CN); ZHANG, Zhihua, Qingyuan, Guangdong 511542 (CN)
(74) Representative: Michalski Hüttermann & Partner Patentanwälte mbB
(86) International application number: PCT/CN2014/071618
(87) International publication number: WO 2015/106470

(57) **Abstract**

Disclosure relates to a mobile power capable of carrying a charging adapter and supporting a recognition of a two-dimensional barcode, comprising a housing and a charging cable for charging a peripheral electronic device, a rechargeable battery and a power-controlling circuit board are arranged in the housing; one end of the charging cable is a charging connector compatible with a peripheral electronic device, the other end of the charging cable is soldered or detachably connected to the power-controlling circuit board; a surface of the housing is provided with a groove for receiving and holding the charging cable; the groove is provided with a receiving cavity for receiving the charging adapter. When the charging cable is held in the groove, it covers the receiving cavity. The housing is provided with the two-dimensional barcode that may contain information. The mobile power of the present invention realizes an integration of the mobile power body, the charging cable and the charging adapter, which facilitates the carrying and is very practical.

## Description

### FIELD OF THE INVENTION

The present invention relates to power technologies, especially to a mobile power capable of carrying a charging adapter and supporting a recognition of a two-dimensional barcode.

### BACKGROUND OF THE INVENTION

As people's living standards improve, a variety of portable electronic devices, such as cell phones, digital cameras, video cameras, portable DVD players, MP3, MP4, PDA (Personal Digital Assistant), palm computers, handheld game players, GPS (Global Positioning System), health care equipments, etc., are becoming indispensable parts of people's lives.

However, in general, the capacity of a battery equipped in an electronic device is relatively low that it often fails to meet people's need for longer hours of use. Especially when one is on a business trip or on a vacation, the electronic device often runs out of batteries at a critical moment, what's worse, it is always difficult to find an immobile power source immediately. Though a preparation of an extra battery in advance for the electronic device may be a good solution to solve the problem, the preparation of various types of battery for different electronic devices is still inconvenient and uneconomic. Since the electronic devices are frequently used, a longer battery life is always desired. In order to solve the problem of how to optimize the supply of power for the electronic devices, people start to use mobile powers.

The mobile power, also called mobile power bank, external battery, portable power source, etc., is a portable power supply device that can both store power and provide power. Generally, the mobile power is characterized by large capacity, long life, safe and reliable properties, and can thus provide power to the electronic devices anywhere and anytime.

The electronic device, such as a smart phone, usually runs a lot of applications, so it drains the battery at a rapid pace, and the battery quickly become depleted in use. However, most of the existing mobile powers need to be used along with an independent charging cable. That is to say, a user has to find a charging cable first when he plans to use the mobile power. In other cases, besides the charging cable, the user also has to find a suitable charging connector at the same time. In order to take the charging cable along with the mobile power, a user often twines the charging cable around a housing of the mobile power, or keeps the charging cable in another place. The charging cables are usually designed to have a small size to save space or facilitate the carrying. However, these small-sized charging cables are easy to miss, especially when a user is in the outdoors.

An existing solution to the above mentioned problem is making the mobile power and the charging cable as an integrated structure. In the existing solution, the housing of the mobile power is provided with a groove, such that, the charging cable can be received and held by the groove. However, this solution only solves the problem of how to carry the charging cable. Since nowadays, electronic product includes a wide range of devices which have a variety of interfaces, the mobile power in the above-mentioned solution only charge a certain device whose interface is compatible with the interface of the charging cable of the existing mobile power. When charging a terminal device whose interface is not compatible with the interface of the charging cable, a user has to bring an additional charging adapter.

In addition, most of the existing mobile powers are designed only to charge the electronic devices, so they lack other functionality. In order to keep pace with booming information networks and the Internet of Things, the mobile power as a portable electronic device is expected to have more functionality.

### SUMMARY OF THE INVENTION

The technical problem solved by the present invention is how to provide a mobile power capable of carrying a charging adapter and supporting a recognition of a two-dimensional barcode, wherein the charging adapter, a charging cable and the mobile power are designed as an integration of them. The charging adapter and the charging cable of the mobile power are flexibly arranged, such that the mobile power of the present invention can supply power to different mobile terminals with different interfaces.

To solve the above technical problem, the present invention provides a mobile power that is capable of carrying a charging adapter and supporting a recognition of a two-dimensional barcode, which comprises a housing and a charging cable for charging a peripheral electronic device, a rechargeable battery and a power-controlling circuit board are arranged in the housing.

One end of the charging cable is a charging connector compatible with the peripheral electronic device, the other end of the charging cable is soldered or detachably connected to the power-controlling circuit board.

A surface of the housing is provided with a groove for receiving and holding the charging cable.

The groove is provided with a receiving cavity for receiving the charging adapter, the charging cable covers the receiving cavity when the charging cable is held in the groove.

The housing is provided with the two-dimensional barcode that contains information.

In one embodiment of the present invention, the two-dimensional barcode is used for communicating with an external real-time voice communication platform via a wireless network.

In another embodiment of the present invention, the two-dimensional barcode is an identification tag in an Internet of Things, and is used for storing customized information such that the information can be transferred in the Internet of Things.

In another embodiment of the present invention, the groove of the housing is further provided with a receiving hole matching a profile of the charging connector. Preferably, the groove is further provided with a pulling region for pulling the charging cable out.

Preferably, the mobile power further comprises the charging adapter inserted in the receiving cavity, and one end of the charging adapter is compatibly connected to the charging connector.

Preferably, the charging connector is a Micro USB connector.

The end of the charging adapter that is compatibly connected to the charging connector is a Micro USB port, the other end of the charging adapter is a lightning connector for connecting to an iPhone.

Preferably, the mobile power further comprises a USB port for connecting to an external power supply to charge the rechargeable battery; the USB port is provided in a side wall of the mobile power.

Preferably, the housing comprises an upper part and a lower part that are engaged with each other to form an integration of them, and an engaging portion of the upper part and the lower part forms a recess in four side walls of the mobile power.

Preferably, the housing further comprises an indicator light for providing an indication of a charge/discharge status and/or the current level of the rechargeable battery; the indicator light is connected to the power-controlling circuit board, and provide the indication of the charge/discharge status and/or level of the rechargeable battery by changing light color, light brightness or light flashing mode of the indicator light.

The mobile power capable of carrying the charging adapter and supporting the recognition of the two-dimensional barcode of the present invention provides the housing. By forming in the surface of the housing the groove that matches the profile of the charging cable, the charging cable can be received and held in the groove. In addition, by forming the receiving cavity that matches the profile of the charging adapter, the charging adapter can be held in the receiving cavity. As the charging cable covers the receiving cavity when the charging cable is held in the groove, the charging adapter will be enclosed in the receiving cavity and is hardly likely to drop out from the receiving cavity, thereby avoiding the missing of the charging adapter. Furthermore, the receiving cavity may receive different types of charging adapters so as to satisfy the users' requirements. In order to charge an electronic device whose interface is not compatible with the charging connector of the mobile power provided by the present invention, the user only needs to pull out the charging cable, connect the charging cable to an interface of the charging adapter inserted in the receiving cavity, pull the charging adapter out from the receiving cavity, and charge any mobile terminal via the charging cable. Besides, the mobile power of the present invention is further provided with the two-dimensional barcode. Users can customize the two-dimensional barcode to communicate with an external device or system. The mobile power of the present invention also realizes an integration of the mobile power, the charging cable and the charging adapter. In brief, the mobile power of the present invention not only provides power to mobile terminals having different charging interfaces, but also expands the use of a mobile power in the field of recognition of two-dimensional barcodes.

### BRIEF DESCRIPTION OF THE DRAWINGS

Fig. 1 illustrates a perspective view of a mobile power in accordance with a first embodiment of the present invention.
Fig. 2 illustrates a bottom view of the mobile power shown in Fig. 1.
Fig. 3 illustrates an exploded view of the mobile power shown in Fig. 1.
Fig. 4 illustrates a perspective view of a charging adapter in accordance with the first embodiment of the present invention.
Fig. 5 illustrates a perspective view of a mobile power in accordance with a second embodiment of the present invention.
Fig. 6 illustrates a perspective view of a mobile power in accordance with a third embodiment of the present invention, and a back of the mobile power is also shown in Fig. 6.
Fig. 7 illustrates a rear view (a) and a right side view (b) of a mobile power in accordance with a fourth embodiment of the present invention.

### DETAILED DESCRIPTION OF ILLUSTRATED EMBODIMENTS

Various preferred embodiments will now be described with reference to the figures.

### Embodiment 1

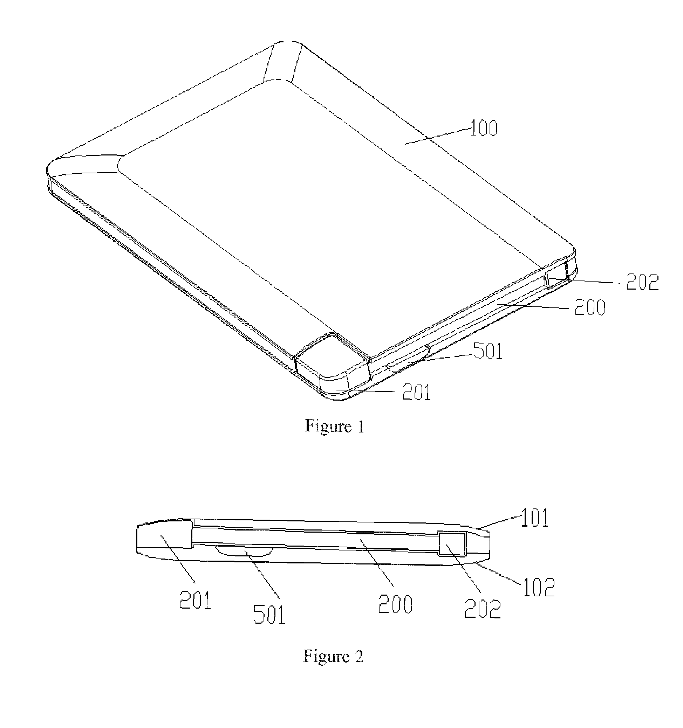

The shape and structure of a mobile power in accordance with a first embodiment of the present invention will be described hereinafter with reference to Fig. 1 - Fig. 4.

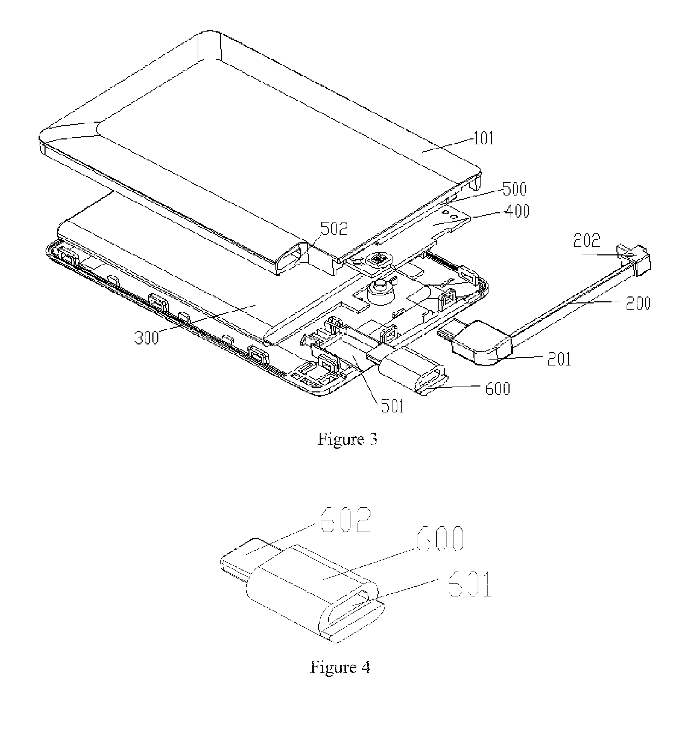

Fig. 1 illustrates a perspective view of a mobile power in accordance with the first embodiment of the present invention; Fig. 2 illustrates a bottom view of the mobile power shown in Fig. 1; Fig. 3 illustrates an exploded view of the mobile power shown in Fig. 1; Fig. 4 illustrates a perspective view of an charging adapter in accordance with the first embodiment of the present invention.

In this embodiment, the mobile power capable of carrying a charging adapter comprises: a housing 100 and a charging cable 200 for charging a peripheral electronic device, a rechargeable battery 300 and a power-controlling circuit board 400 are arranged in the housing 100. In practice, in order to save space and facilitate carrying, the power-controlling circuit board 400 can be packaged in TSSOP20-PP, thereby the number of peripheral elements of the circuit is reduced, the size of the power-controlling circuit board 400 is controlled and occupied space of the power-controlling circuit board 400 is thus saved. It should be noted that the size of the power-controlling circuit board 400 can be selected from a certain range. In one embodiment of the present invention, under the control of the power-controlling circuit board 400, the rechargeable battery 300 outputs a 5V direct voltage.

In this embodiment, one end of the charging cable 200 is a charging connector 201 compatible with a peripheral electronic device, while the other end 202 of the charging cable 200 is soldered or detachably connected to the power-controlling circuit board 400.

A surface of the housing 100 is provided with a groove 500 for receiving and holding the charging cable 200. As shown in Fig. 3, the charging cable can be detachably connected to the power-controlling circuit board 400, which means, the two ends of the charging cable 200 both can be plugged into the mobile power, the body of the charging cable 200 is preferably made from flexible material that can be received in the groove 500. In order to charge a peripheral device, the user only needs to pull the charging connector 201 out.

The groove 500 is provided with a receiving cavity 501 for receiving the charging adapter; the charging cable 200 can cover the receiving cavity 501 when the charging cable 200 is held in the groove 500. In practice, an interior portion of the receiving cavity 501 matches a profile of the charging adapter, in this way, the charging adapter can be clamped tightly in the receiving cavity 501 and will not drop out easily. In addition, in order to further prevent the charging adapter from dropping out when the mobile power are suffering from strong impact, the receiving cavity 501 has its opening towards the groove 500, so when the charging cable 200 is held in the groove, the charging cable 200 covers the receiving cavity 501, thus can block the opening of the receiving cavity 501. The structure of the charging cable 200, the groove 500 and the receiving cavity 501 enables the mobile power of the present invention to carry a desired charging adapter inside, and realizes an integration of the mobile power body, the charging cable and the charging adapter.

In this embodiment, optionally, the mobile power further comprises the charging adapter 600 that can be received in the receiving cavity 501. One end of the charging adapter 600 can be compatibly connected to the charging connector 201, while the other end of the charging adapter 600 can be any other charging interface. In this embodiment, the charging connector 201 is preferably a Micro USB connector.

The Micro USB connector is a miniaturized version of USB2.0, and is an updated version of Mini-USB connector. It can support OTG (On-The-Go) and also has 5 pins. The Micro USB connector exists in several forms, one of which is Micro-B that has been used in standard devices. OTG technology permits "slave devices" to communicate with each other without the need to be connected to a Host (PC), and it also supports Plug-and-Play.

Preferably the groove 500 is further provided with a pulling region (not shown in Fig. 1- Fig. 4) for pulling the charging cable 200 out.

As shown in Fig. 4, one end of the charging adapter 600 is a Micro USB port 601 that can be compatibly connected to the charging connector 201, while the other end of the charging adapter 600 is a lightning connector 602 for connecting to an iPhone. In practice, the charging adapter 600 can be customized according to actual needs, provided that one end of the charging adapter 600 must be compatible with the charging connector 201. That is to say, if the charging connector 201 is a Micro USB male, then one end of the charging adapter 600 should be a Micro USB female, while the other end 602 of the charging adapter 600 can be customized according to the interface protocol of the peripheral electronic device.

Preferably, the charging adapter 600 is a Micro-USB-to-lightning adapter. Lightning connector was created by Apple Inc. in 2012. The lightning connector has 8 pins on each of the two sides thereof, and can works in either direction, so the user doesn't have to see which side is right and an incorrect insertion will thus be avoided. The main benefits of the lightning connector are the ease of use, high durability, and self-adaptation. As for the self-adaptation, the lightning connector can transmit different signals for different types of devices according to the requirement of the devices. Besides, the lightning connector can support video output.

It should be noted that, in the present embodiment, the charging adapter 600 can be either a part of the mobile power of the present invention or an independent member independent of the mobile power of the present invention. Users may customize the charging adapter 600 according to actual needs.

Preferably, as shown in Fig. 2, the housing 100 comprises an upper part 101 and a lower part 102.

As shown in Fig. 3, in this embodiment, the groove 500 of the housing 100 is further provided with a receiving hole 502 matching a profile of the charging connector 201. The groove 500 is preferably arranged in a lower wall of the housing 100.

In this embodiment, by forming in the housing the groove that matches the profile of the charging cable, the mobile power can receive and hold the charging cable in the groove. Besides, by forming the receiving cavity that matches the profile of the charging adapter, the mobile power can hold the charging adapter in the receiving cavity. As the charging cable covers the receiving cavity when the charging cable is held in the groove, the charging adapter will be enclosed in the receiving cavity and is hardly likely to drop out from the receiving cavity, thereby avoiding the missing of the charging adapter. Furthermore, the receiving cavity may receive different types of charging adapters so as to satisfy the users' requirements. The mobile power provided by this embodiment of the present invention realizes an integration of the mobile power, the charging cable and the charging adapter, so the user may charge various mobile terminals having different interfaces without carrying an independent charging cable or charging adapter. Therefore, the mobile power provided by this embodiment of the present invention is more practical and more flexible.

### Embodiment 2

The structure of the mobile power provided by the second embodiment is similar to the one provided by the first embodiment. The structure of the mobile power of the second embodiment differs from that of the first embodiment in that: in the second embodiment, the housing 100 further comprises an indicator light 700 for providing an indication of a charge/discharge status and/or the current level of the rechargeable battery 300.

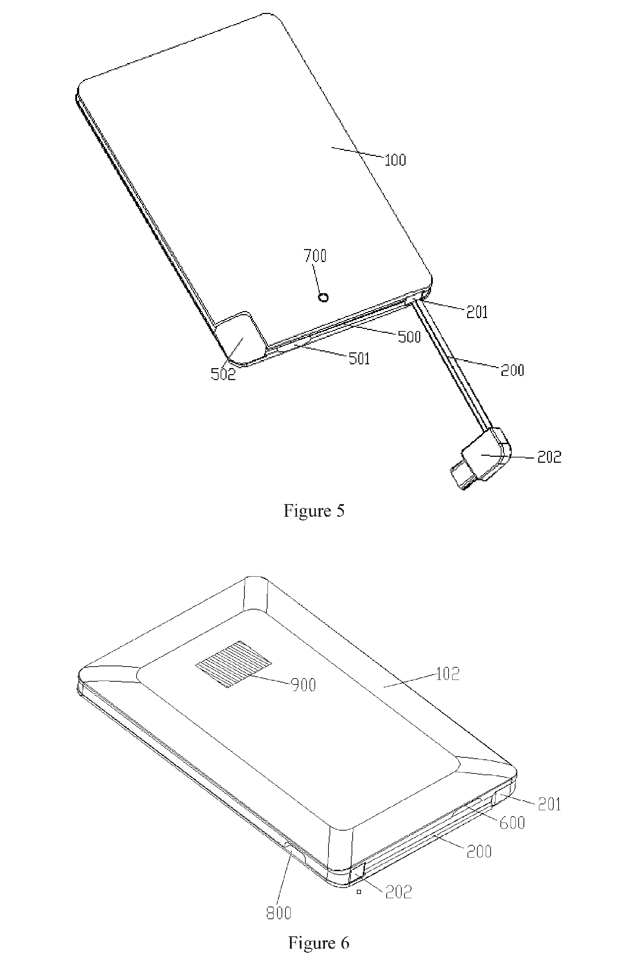

Fig. 5 illustrates a perspective view of a mobile power in accordance with the second embodiment of the present invention.

In practice, the indicator light 700 is connected to the power-controlling circuit board 400, and the indicator light 700 can indicate the charge/discharge status of the rechargeable battery 300 by changing its light color, light brightness or light flashing mode. Preferably, the indicator light 700 is LED (Light-Emitting Diode); in addition, the indicator light 700 is provided preferably on an upper part 101 of the housing. It should be noted that the way to indicate the charge/discharge status or the current battery level of the rechargeable battery 300 includes but is not limited to changing the indicator's light color, light brightness, light flashing mode, or their combinations. For example, a red light and a blue light flashing alternately can be used to indicate that the rechargeable battery 300 is charging, while a red light and a green light flashing alternately can be used to indicate that the rechargeable battery 300 is discharging.

This embodiment adds an indicator light to the mobile power provided by the first embodiment to help users observe the status of the mobile power in a simple and fast manner.

### Embodiment 3

Based on the second embodiment, the mobile power provided by the third embodiment further comprises a USB port 800 for charging the rechargeable battery 300 from an external power supply.

Fig. 6 illustrates a perspective view of a mobile power in accordance with the third embodiment of the present invention, and a back of the mobile power is also shown in Fig. 6.

To be more specific, the USB port 800 is provided in a side wall of the mobile power. In this embodiment, the mobile power has a cube structure, and the USB port 800 may be arranged in any one of the four side walls of the cube. As shown in Fig. 6, the USB port 800 is provided in a right side wall of the mobile power. In this embodiment, the USB port 800 is preferably a Micro USB port.

The rechargeable battery of the mobile power having a USB port in this embodiment can be charged by connecting the USB port to an external power supply or an electronic device that is in energized state via a USB cable.

### Embodiment 4

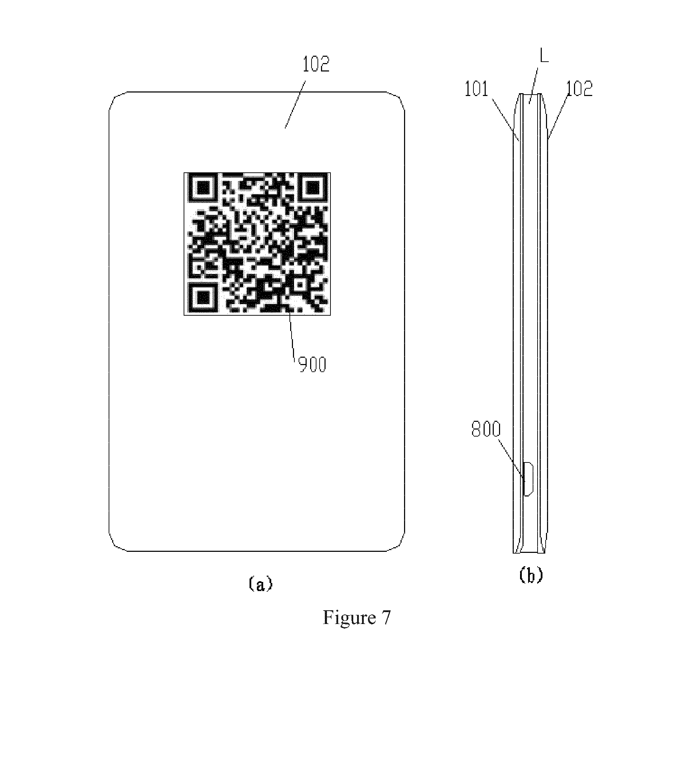

Fig. 7 illustrates a rear view and a right side view of a mobile power in accordance with the fourth embodiment of the present invention. Wherein, Fig. 7 (a) illustrates the rear view of the mobile power, and Fig. 7 (b) illustrates the right side view of the mobile power.

The structure of the mobile power provided by the fourth embodiment is similar to the one provided by the first embodiment. The structure of the mobile power of the fourth embodiment differs from that of the embodiments 1-3 in that: in the fourth embodiment, the housing is provided with a two-dimensional barcode, wherein the two-dimensional barcode may contain information.

In an embodiment of the present invention, the two-dimensional barcode 900 is used to communicate with an external real-time voice communication platform via a wireless network. In another embodiment, the two-dimensional barcode 900 is an identification tag in an Internet of Things, and is used for storing customized information to be transferred in the Internet of Things.

The real-time voice communication platform is a product in the information age. Users may send voices, videos, photos, texts etc. through a platform with their smart phones, tablet computers, and browsers. A typical real-time voice communication platform is Wechat platform which is developed by Tencent Inc.

Since Wechat platform can provide service across communication operators and operating systems, in this embodiment, users may scan the two-dimensional barcode 900 in the mobile power with Wechat platform by using a smart phone to obtain the customized information stored in the two-dimensional barcode 900, thereby realizing a communication between the two-dimensional barcode 900 and the internet. To be more specific, the principle of transmitting the information stored in the two-dimensional barcode 900 with Wechat platform is as follows: Server creates a UUID for Web Client so as to listen for login requests; a smart phone, acting as Web Client, logs in Wechat, obtains an access authorization, scans the two-dimensional barcode 900 in the mobile power of the present invention, obtains the UUID, encodes and sends the access authorization and the UUID to Server; Server then generates a login authorization and informs Web Client which at the moment is listening; Web Client listens and obtains the authorization, sends a request for user information and finishes reading the information stored in the two-dimensional barcode 900.

In this embodiment, optionally, the housing 100 comprises an upper part 101 and a lower part 102 that are engaged with each other to form an integration of them, and an engaging portion of the upper part and the lower part forms a recess L in four side walls of the mobile power. As shown in Fig. 7 (b), in practice, a housing portion adjacent to four edges of the upper part 101 are inclined towards to the lower part 102, while a housing portion adjacent to four edges of the lower part 102 are inclined towards upper part 101. The recess L is formed between the upper part 101 and the lower part 102, and the access L can be a part of the upper part 101 or a part of the lower part 102. On one hand, the recess L reduces the space occupied by the mobile power. On the other hand, the recess L provides a place for installing buttons or receiving charging cables, such that the buttons or the charging cables may not protrude beyond the edges of the housing 100, in this way, unexpected pressing of the button can be avoided. In addition, the recess L may also make the housing look thinner.

The mobile power provided by the embodiments of the present invention allows the user to customize users' information. By using the two-dimensional barcode, the mobile power can communicate with the external real-time voice communication platform, moreover, the mobile power can connect to the Internet of Things and acquire the information therein. Therefore, the mobile power provided by the embodiments of the present invention has more functionality and more application area as compared with existing mobile powers. In conclusion, the mobile power in the embodiment of the present invention is provided with the two-dimensional barcode which can store information, users of the mobile power can thus communicate with external devices or systems through the two-dimensional barcode that contains the customized information. The mobile power in this embodiment also realizes an integration of the mobile power, the charging cable and the charging adapter. Therefore, the mobile power in the embodiment of the present invention not only provides power to mobile terminals having different charging interfaces, and but also expands the use of a mobile power in the field of recognition of two-dimensional barcode.

All the above are the preferred embodiments of the present invention. It should be noted that any variation or replacement readily figured out by persons skilled in the art within the technical scope of the present invention shall fall within the protection scope of the present invention.

## Claims

1. A mobile power capable of carrying a charging adapter and supporting a recognition of a two-dimensional barcode, **characterized in that**,
the mobile power comprises a housing and a charging cable for charging a peripheral electronic device, a rechargeable battery and a power-controlling circuit board are arranged in the housing;
one end of the charging cable is a charging connector compatible with the peripheral electronic device, the other end of the charging cable is soldered or detachably connected to the power-controlling circuit board;
a surface of the housing is provided with a groove for receiving and holding the charging cable;
the groove is provided with a receiving cavity for receiving the charging adapter, the charging cable covers the receiving cavity when the charging cable is held in the groove; and
the housing is provided with the two-dimensional barcode that contains information.

2. The mobile power as claimed in claim 1, **characterized in that**, the two-dimensional barcode is used for communicating with an external real-time voice communication platform via a wireless network.

3. The mobile power as claimed in claim 1, **characterized in that**, the two-dimensional barcode is an identification tag in an Internet of Things, and is used for storing customized information to be transferred in the Internet of Things.

4. The mobile power as claimed in claim 1, **characterized in that**, the groove of the housing is further provided with a receiving hole matching a profile of the charging connector.

5. The mobile power as claimed in claim 4, **characterized in that**, the groove of the housing is further provided with a pulling region for pulling the charging cable out.

6. The mobile power as claimed in any one of claims 1-5, **characterized in that**, the mobile power further comprises the charging adapter inserted in the receiving cavity, and one end of the charging adapter can be compatibly connected to the charging connector.

7. The mobile power as claimed in claim 6, **characterized in that**, the charging connector is a Micro USB connector.

8. The mobile power as claimed in claim 7, **characterized in that**, the end of the charging adapter that can be compatibly connected to the charging connector is a Micro USB port, the other end of the charging adapter is a lightning connector for connecting to an iPhone.

9. The mobile power as claimed in claim 1, **characterized in that**, the mobile power further comprises a USB port for connecting to an external power supply to charge the rechargeable battery; the USB port is provided in a side wall of the mobile power.

10. The mobile power as claimed in claim 1, **characterized in that**, the housing comprises an upper part and a lower part that are engaged with each other to form an integration of them, and an engaging portion of the upper part and the lower part forms a recess in four side walls of the mobile power.

11. The mobile power as claimed in claim 1, **characterized in that**, the housing further comprises an indicator light for providing an indication of a charge/discharge status and/or a current battery level of the rechargeable battery.

12. The mobile power as claimed in claim 11, **characterized in that**, the indicator light is connected to the power-controlling circuit board, and the indicator light indicates the charge/discharge status and/or the current battery level of the rechargeable battery by changing light color, light brightness or light flashing mode of the indicator light.
